# EUROPÄISCHE PATENTSCHRIFT

(11) **EP 0 941 761 B1**
(45) Veröffentlichungstag und Bekanntmachung des Hinweises auf die Patenterteilung: **12.06.2002**
(21) Anmeldenummer: 99101034.9
(22) Anmeldetag: 21.01.1999
(51) Int. Cl.: B01J 13/02

(54) **Verfahren zur Herstellung mikroverkapselter Produkte mit Organopolysiloxanwänden**
Method of preparation of microencapsulated products with walls in organopoysiloxane
Procédé de fabrication de produits microencapsulés à parois en organopolysiloxane

(30) Priorität: 12.03.1998 DE 19810803
(43) Veröffentlichungstag der Anmeldung: 15.09.1999
(73) Patentinhaber: Wacker-Chemie GmbH, 81737 München (DE)
(72) Erfinder: Deubzer, Bernward, Dr., 84489 Burghausen (DE); Dauth, Jochen, Dr., 84489 Burghausen (DE)
(74) Vertreter: Fritz, Helmut, Dr.

(56) Entgegenhaltungen:
- EP-A- 0 304 416
- EP-A- 0 436 449
- DE-A- 1 962 039
- DE-A- 19 741 581
- US-A- 4 169 069
- US-A- 4 980 392

## Beschreibung

Die Erfindung betrifft ein Verfahren zur Herstellung von Mikrokapseln mit Hüllwänden aus Organopolysiloxan.

Die Verwendung von Organopolysiloxanen als Hüllmaterial und Verfahren zur Herstellung von Mikrokapseln mit Hüllwänden aus Organopolysiloxanen sind bekannt. Allen beschriebenen Verfahren ist gemeinsam, daß die Wandbildung aus bereits hergestellten Organopolysiloxanen erfolgt.

Die Verwendung von festen, thermoplastischen Organosiloxanpolymeren für Hüllwände ist beispielsweise in US-A-5,254,656 beschrieben. Die Organosiloxanpolymere müssen in geeigneten Lösungsmitteln gelöst, die Lösung unter genau kontrollierten Bedingungen dem zu verkapselnden Material zugegeben und das Lösungsmittel aufwendig wieder entfernt werden.

Die Verwendung flüssiger Organosiloxanpolymere für Hüllwände ist beispielsweise in US-A-4,370,160 beschrieben. Die Organosiloxanpolymere müssen durch einen eigenen Härtungsschritt in den festen Zustand überführt werden.

In EP-A-304416 ist ein Verfahren zur Bildung von Mikrokapseln beschrieben, bei dem siliciumorganische Verbindungen mit großen Kohlenwasserstoffresten eingesetzt werden.

Beim Verfahren von EP-A-436449 werden aus Alkoxysilanen bzw. Alkoxysiloxanen Polysesquioxane vorkondensiert, die magnetisierbare Teilchen einhüllen.

Beim Verfahren von US-A-4980392 werden aus Alkoxysilanen und Silankupplungsmitteln ein Hydrolysat gebildet und danach in Anwesenheit eines basischen Katalysators polykondensiert. Dabei entsteht eine Matrix, die Geruchsstoffe einschließt.

Die bekannten Verfahren zur Mikroverkapselung mit Organopolysiloxanen benötigen teuere Rohstoffe, sie sind technologisch aufwendig und behindern so den praktischen Einsatz von Organopolysiloxanen als Hüllmaterialien in der Mikroverkapselung, obwohl Organopolysiloxane aufgrund ihrer weiten Variationsbreite und ungewöhnlichen Eigenschaften großes Interesse besitzen.

Es bestand also die Aufgabe, ein Verfahren zu finden, das es gestattet, auf einfache Weise und aus leicht zugänglichen Rohstoffen Hüllwände aus Organopolysiloxanen aufzubauen.

Gegenstand der Erfindung ist ein Verfahren zur Herstellung von Mikrokapseln mit Hüllwänden aus Organopolysiloxan und einem zu verkapselnden flüssigen wasserunlöslichen Kernmaterial, bei dem Organosilane und/oder deren Kondensationsprodukte mit höchstens 4 Siliziumatomen zu einer wäßrigen Emulsion oder Dispersion des Kernmaterials unter Durchmischen zugegeben werden, wobei die Hüllwände durch Hydrolyse und Polykondensation der Organosilane und/oder deren Kondensationsprodukte in situ aufgebaut werden und bei dem die Mikrokapseln durch Filtration, Zentrifugieren oder Sprühtrocknen isoliert werden.

Die im Verfahren verwendeten Organosilane besitzen vorzugsweise die allgemeinen Formeln Ia bis Ie

R¹ ₂R²SiX (Ia),

R¹R²SiX₂ (Ib),

R²SiX₃ (Ic),

SiX₄ (Id),

X₃Si-R³-SiX₃ (Ie),

in denen
- **R**^{**1**}: einen einwertigen, gegebenenfalls halogensubstituierten und gegebenenfalls durch Ethersauerstoffatome unterbrochenen Kohlenwasserstoffrest mit jeweils 1 bis 18 Kohlenstoffatomen oder ein Wasserstoffatom bedeutet,
- **R**^{**2**}: die Bedeutungen von **R**^{**1**} hat oder einen einwertigen Kohlenwasserstoffrest mit 1 bis 12 Kohlenstoffatomen je Rest, der durch eine oder mehrere Gruppen der Formeln -NR¹-, -S-, -O-, -CO-O- unterbrochen sein kann und der mit ein oder mehreren Gruppen der Formeln -SH, -OH, -NR¹₂, -Cl, -COOH, 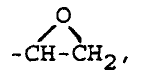 -O-CO-CR³=CH₂ substituiert sein kann, darstellt,
- **R**^{**3**}: ein zweiwertiger Alkylrest mit 1 bis 6 Kohlenstoffatomen oder die Phenylengruppe ist und
- **X**: eine Gruppe -OR⁴, eine Acetoxy-, Amino-, Säureamid, Oximinogruppe oder ein Chloratom bedeutet,
- **R**^{**4**}: ein Wasserstoffatom oder einen Alkylrest mit 1 bis 8 Kohlenstoffatomen je Rest, der durch Ethersauerstoffatome unterbrochen sein kann, bedeutet.

Beispiele für Reste **R**^{**1**} sind Alkylreste, wie der Methyl-, Ethyl, n-Propyl-, iso-Propyl-, 1-n-Butyl-, 2-n-Butyl-, isoButyl, tert.-Butyl-, n-Pentyl-, iso-Pentyl-, neo-Pentyl-, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Bevorzugt sind die Alkylreste mit 1 bis 10, insbesondere bis 6 Kohlenstoffatomen, insbesondere der Methyl- und Ethylrest. Beispiele für Alkylreste **R**^{**1**}, die durch ein Ethersauerstoffatom substituiert sind, sind der Methoxyethyl- und Ethoxyethylrest.

Beispiele für halogenierte Reste **R**^{**1**} sind Halogenalkylreste, wie der 3,3,3-Trifluor-n-propylrest, der 2,2,2,2',2',2' -Hexafluorisopropylrest, der Heptafluorisopropylrest und Halogenarylreste, wie der o-, m- und p-Chlorphenylrest.

Beispiele für aliphatisch ungesättigte Reste **R**^{**1**} sind Alkenylreste, wie der Vinyl-, 5-Hexenyl-,
2,4-Divinylcyclohexylethyl-, 2-Propenyl-, Allyl-, 3-Butenylund 4-Pentenylrest; und Alkinylreste, wie der Ethinyl-, Propargyl- und 2-Propinylrest.

Bevorzugte Reste R² sind Reste der Formeln

- (CH₂)ₘ-SH,

- (CH₂)ₘ-OH,

- (CH₂)ₘ-Cl,

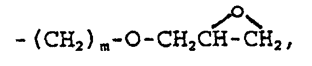

- (CH₂)ₙ-COOH,

- (CH₂)ₘ-NH(C₆H₁₁),

- (CH₂)ₘ-NH₂,

-(CH₂)ₘ-NH(CH₃),

- (CH₂)ₘ-NH-(CH₂)ₘ-NH₂,

- (CH₂)ₘ-O-(CH₂)ₘ-CH₃,

- (CH₂)ₘ-[-O-(CH₂)ₙ]ₘ-O-(CH=CH₂)

- (CH₂)ₘ-O-CO-CH=CH₂,

wobei
**m** die Werte 1, 2, 3, 4, 5 oder 6 und
**n** die Werte 1 bis 18, insbesondere 6 bis 12 bedeuten.

Durchschnittlich weisen die Organosilane mindestens 2,05, vorzugsweise mindestens 2,1, insbesondere mindestens 2,3 Reste X berechnet pro Molekül Organosilan der allgemeinen Formeln Ia bis Ie auf.

Die Organosilanzusammensetzung wird vorzugsweise so gewählt, daß das als Hüllwand gebildetete Organopolysiloxan der allgemeinen Formel II

[R¹ ₂R²SiO_{1/2}]ₓ[R¹R²SiO_{2/2}]_{y}[R²SiO_{3/2}]_{z}[SiO4/2]ᵤ[SiO_{3/2}-R³-SiO_{3/2}]ᵥ (II),

entspricht, in der

| | |
|---|---|
| **x** | 0 bis 60 Mol%, |
| **y** | 0 bis 95 Mol%, |
| **z** | 0 bis 100 Mol%, |
| **u** | 0 bis 50 Mol% und |
| **v** | 0 bis 100 Mol% bedeuten und, |
| **R**^{**1**} **, R**^{**2**} **und R**^{**3**} | die oben angegebenen Bedeutungen besitzen. |

Vorzugsweise bedeuten

| | |
|---|---|
| **x** | 0 bis 30 Mol%, |
| **y** | 0 bis 50 Mol%, |
| **z** | 50 bis 100 Mol%, |
| **u** | 0 bis 20 Mol% und |
| **v** | 0 bis 50 Mol%. |

Man arbeitet bevorzugt mit einem so großen Überschuß an Wasser, daß die nach Aufbau der Hüllwände aus Organosilanen und/oder deren Kondensationsprodukten durch Hydrolyse und Kondensation der Organosilane und/oder deren Kondensationsprodukte gebildeten Mikrokapseln als Dispersion oder Suspension in wäßriger Phase vorliegen und weiter verarbeitet werden können.

Nach Zugabe der Organosilane und/oder deren Kondensationsprodukte bilden sich die Hüllwände. Die nicht mit Wasser mischbare flüssige Phase muß so gewählt werden, daß sie mit den Organosilanen und/oder deren Kondensationsprodukten mischbar ist, aber nicht als Lösungsmittel für die gebildeten Organopolysiloxanhüllwände wirkt.

In Frage kommen beispielsweise technisch gebräuchliche Lösungsmittel, wie Aliphaten, Aromaten, Ester sowie Alkohole, Ketone, Ether, soweit diese nicht wassermischbar sind. Vorzugsweise sind die Lösungsmittel zu weniger als 1 Gew.-% bei 20°C in Wasser löslich. Bevorzugte Lösungsmittel sind Hexan, n-Heptan, Benzinfraktionen, Toluol und Xylol. Es muß weiterhin mindestens soviel Wasser zugegen sein, daß die Hydrolyse ablaufen kann. Die gebildeten Mikrokapseln liegen in nichtwäßriger Phase vor und können aus dieser weiterverarbeitet werden.

Die erfindungsgemäße Kapselhüllwand ist; abhängig vom Molekulargewicht und dem eingestellten Verhältnis der Indices **u**, **v**, **x, y** und **z** eine hochviskose bis feste Substanz, die weder in der wäßrigen Phase noch im Kapselkern löslich ist.
Hydrolyse und Polykondensation verlaufen auch ohne Zusätze von Hydrolyse- und Kondensationskatalysator, bezvorzugt werden jedoch solche zugesetzt.

Die Katalysatoren können sauer oder basisch sein, bevorzugt werden basische Katalysatoren verwendet.

Beispiele für basische Hydrolyse- und Kondensationskatalysatoren sind Aminosilane, durch Hydrolyse Ammoniak freisetzende Verbindungen wie Divinyltetramethyldisilazan, Hexamethyldisilazan, organische Aminverbindungen wie n-Hexylamin, Triethylamin, Diethylamin, Tributylamin, Piperidin, Diazabicyclooctan, organische Hydroxide, insbesondere quarternäre Kohlenwasserstoffammoniumhydroxide, wie Tetramethylammoniumhydroxid, Tetrabutylammoniumhydroxid, Trimethylbenzylammoniumhydroxid und anorganische Hydroxide wie Natriumhydroxid, Lithiumhydroxid, Kaliumhydroxid, sowie ein Gemisch der o.g. Verbindungen.

Besonders bevorzugt als basische Katalysatoren sind die Aminosilane der allgemeinen Formel III,

XₐSi -[R⁶ _{b}-NR⁵]_{c}-R⁶-N (R⁵)₂ (III),

in der
- **R**^{**5**}: ein Wasserstoffatom oder einen Alkylrest mit 1 bis 8 Kohlenstoffatomen je Rest,
- **R**^{**6**}: einen zweiwertigen Alkylrest mit 1 bis 6 Kohlenstoffatomen,
- **a**: die Werte 1, 2 oder 3,
- **b**: die Werte 1, 2, 3 oder 4 und
- **c**: die Werte 0, 1 , 2 oder 3 bedeuten und
- **X**: die vorstehenden Bedeutungen aufweist.

Die Aminosilane der allgemeinen Formel III werden in das die Hüllwand bildende Organopolysiloxan eingebaut. Dadurch kann die Polarität der die Hüllwand bildenden Organopolysiloxane beeinflußt werden.

Vorzugsweise bedeutet **X** Methoxy- oder Alkoxyreste.

Bevorzugte Beispiele für Aminosilane der allgemeinen Formel III sind Aminopropyltrimethoxysilan,
Aminoethylaminopropyltrimethoxysilan und
N-Cyclohexylaminopropyltrimethoxysilan.

Bei der Hydrolyse und Kondensation wird der Katalysator vorzugsweise in Mengen von 0,1 bis 30 Gew.-%, bezogen auf das Gewicht der Organosilane und/oder deren Kondensationsprodukte der allgemeinen Formeln Ia bis Ie eingesetzt. Die basischen Katalysatoren können den Organosilanen und/oder deren Kondensationsprodukten oder der wäßrigen Phase zugesetzt werden.

Die Reste **R**^{**1**}**, R**^{**2**}**, R**^{**3**}**, R**^{**4**}**, R**^{**5**} und **R**^{**6**} sowie die Indices **a, b, c, m, n, u, v, x, y** und **z** können in den vorstehenden Formeln unabhängig voneinander jeweils gleich oder verschieden sein.

Beispiele für gegebenenfalls zusetzbare Emulgatoren sind kommerziell erwerbbare und gut untersuchte Tenside, wie z.B. Sorbitanester von Fettsäuren mit 10 bis 22 Kohlenstoffatomen; Polyoxyethylensorbitanester von Fettsäuren mit 10 bis 22 Kohlenstoffatomen und bis zu 35 Prozent Ethylenoxidgehalt; Polyoxyethylsorbitolester von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 10 bis 22 Kohlenstoffatomen mit bis zu 95 Prozent Ehtylenoxidgehalt; ionische Tenside, wie Alkylarylsulfonate mit 6 bis 20 Kohlenstoffatomen in der Alkylgruppe; Fettsäureseifen mit 10 bis 22 Kohlenstoffatomen; Fettsulfate mit 10 bis 22 Kohlenstoffatomen; Alkylsulfonate mit 10 bis 22 Kohlenstoffatomen, Alkalimetallsalze von Dialkylsulfosuccinaten; Fettaminooxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Tenside, wie Fettammoniumverbindungen mit 10 bis 22 Kohlenstoffatomen; Fettmorpholinoxide mit 10 bis 22 Kohlenstoffatomen;
Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; alkoxylierte Silicontenside mit Ethylenoxid- und/oder Propylenoxideinheiten; Phosphatester.

Wie auf dem Gebiet der Tenside wohl bekannt, können die Gegenionen im Falle von anionischen Tensiden Alkalimetalle, Ammoniak oder substituierte Amine, wie Trimethylamin oder Triethanolamin sein. Normalerweise sind Ammonium, Natrium- und Kaliumionen bevorzugt. Im Falle von kationischen Tensiden ist das Gegenion ein Halogenid, Sulfat oder Methylsulfat. Chloride sind die zumeist industriell verfügbaren Verbindungen.

Die obengenannten Fettstrukturen stellen üblicherweise die lipophile Hälfte der Tenside dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Alkylgruppen können dabei cyclisch, linear oder verzweigt sein.

Andere mögliche Tenside sind Sorbitolmonolaurat-Ethylenoxidkondensate; Sorbitolmonomyristat-Ethylenoxidkondensate; Sorbitolmonostearat-Ethylenoxidkondensate; Dodecylphenol-Ethylenoxidkondensate; Myristylphenol-Ethylenoxidkondensate; Octylphenol-Ethyloxidkondensate; Stearylphenol-Ethylenoxidkondensate; Laurylakohol-Ethylenoxid-kondensate; Stearylakohol-Ethylenoxidkondensate; Decylaminobetain; Cocoamidsulfobetain; Oleylamidobetain; Cocoimidazolin; n-Cocomorpholinoxid; Decyldimethylaminoxid; Cocoamidodimethylaminooxid; Sorbitantristearat mit kondensierten Ethylenoxidgruppen; Sorbitantrioleat mit kondensierten Ethylenoxidgruppen, Natrium- oder Kaliumdodecylsulfat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natriumoder Kaliummyristat.

Andere mögliche Schutzkolloide sind teilverseifte Polyvinylalkohole.

Die Komponente kann aus einem o.g. Tensid oder aus einem Gemisch zweier oder mehrerer o.g. Tenside bestehen.

Beispiele für gegebenenfalls zusetzbare Suspensionshilfsmittel sind Gelatine, Agar, Pektine, Alginate, Methylcellulose, Polyvinylpyrolidon , Tonerde, Bentonite, Kieselgur, Calciumphosphate und Bariumsulfat.

Die Mikrokapseln besitzen vorzugsweise ein Kernmaterial/Hüllwand-Verhältnis von 0,3 bis 4,0, insbesondere 1,0 bis 3,0, jeweils bezogen auf das Gewicht.

Bei dem Verfahren beträgt das Gewichtsverhältnis von Hüllwand und Kapselkern zur wäßrigen Phase 0,05 bis 0,6, vorzugsweise 0,1 bis 0,4.

Die Mikrokapseln können eine Größe von 0,5 µm bis 1000 µm haben.

Die Mikrokapselhüllwände besitzen noch Restalkoxy- oder Hydroxystufen von 0,1 bis 20 Gewichtsprozent.

Das Verkapseln wird dabei bei einer Temperatur von vorzugsweise 10°C bis 100°C, besonders bevorzugt 25°C bis 80°C, und einem Druck von vorzugsweise 900 bis 2 000 hPa durchgeführt. Es kann aber auch bei höheren oder niedrigeren Drücken gearbeitet werden. Die Mikrokapseln werden durch bekannte Technologien wie Filtration, Zentrifugieren oder Sprühtrocknen isoliert und zu Pulvern getrocknet.

Vorzugsweise wird der bei der Hydrolyse entstehende Alkohol bei der Aufarbeitung entfernt. Die Mikrokapselhüllwände können permeable, semipermeable oder dichte Eigenschaften aufweisen.

Darüber hinaus können die Mikrokapseln für alle Anwendungen eingesetzt werden, bei denen auch bisher Mikrokapseln verwendet wurden.

Die Mikrokapseln dienen z.B. der Behandlung von textilen Flächengebilden wie Geweben, Maschenwaren oder Vliesen. Die Erfindung betrifft ferner Textilfaserpräparation und Lederbehandlung. Weiterhin finden die erfindungsgemäßen Mikrokapseln Einsatz in der Kosmetik-, Pflegemittel-, Klebstoff-, Polituren-, Lack-, Papier- und Bauindustrie.

Ferner dienen sie als Antischaummittel und der Verträglichkeitsvermittlung von Organosiliziumverbindungen und organi-. schen Polymeren.

In den nachfolgenden Beispielen sind, falls jeweils nicht anders angegeben,
a) alle Mengenangaben auf das Gewicht bezogen;
b) alle Drücke 1000 hPa (abs.);
c) alle Temperaturen 20° C.

### Beispiele:

### Beispiel 1

61 g einer handelsüblichen, nichtionisch stabilisierten Emulsion CT 94 E (Wacker-Chemie GmbH, München) enthaltend 33 g eines flüssigen trimethylsilylterminierten Dimethylpolysiloxans werden mit 182 g Wasser verdünnt. Unter Rühren (400 UpM mit Magnetrührer) wird eine Mischung aus 30 g Methyltrimethoxysilan und 2,4 g Aminoethylaminopropyltrimethoxysilan zugegeben. Es wird drei Stunden lang nachgerührt und über einen Filter abfiltriert.
Der Filterkuchen wird 5 Tage lang bei Raumtemperatur getrocknet. Es werden 32 g (65% d.Th.) eines freifließenden, weißen, feinkörnigen Pulvers erhalten, das auf Druck den öligen Inhalt freigibt.

### Beispiel 2

Das Vorgehen von Beispiel 1 wird wiederholt. Es wird jedoch eine Mischung aus 27 g Methyltrimethoxysilan und 3,3 g Hexamethyldisilazan zugegeben.
Ausbeute 19 g (38% d.Th.) eines freifließenden weißen Pulvers.

### Beispiel 3

Das Vorgehen von Beispiel 1 wird wiederholt. Es wird jedoch eine Mischung aus 34 g Methyltrimethoxysilan und 1,7 g n-Hexylamin zugegeben.
Ausbeute 40 g (79 % d.Th.) eines freifließenden weißen Pulvers.

### Beispiel 4

Das Vorgehen von Beispiel 1 wird wiederholt. Es wird jedoch eine Mischung aus 27 g Methyltrimethoxysilan und 0,2 g Lithiumhydroxidhydrat und 0,2 g Ethylendiamin zugegeben.
Ausbeute 29 g (61 % d.Th.) eines freifließenden weißen Pulvers.

### Beispiel 7

400 g einer Styrolacrylatdispersion mit 50% Festgehalt (Acronal® 290 D der Fa. BASF, Ludwigshafen) werden mit 1600 g Wasser verdünnt. Unter gutem Rühren (Magnetrührer mit 400 UpM) wird eine Mischung aus 365 g Methyltrimethoxysilan und 29 g Aminoethylaminopropyltrimethoxysilan zugegeben und drei Stunden lang nachgerührt.
Nach Aufarbeitung gemäß Beispiel 1 werden 363 g (61% d.Th.) eines freifließenden weißen Pulvers erhalten.

### Beispiel 8

33 g eines handelsüblichen Paraffinöls mit einer Viskosität von 111 mm²/s bei 25°C und einer Dichte von 0,88 g/cm³ (Fa. Merck, Darmstadt) werden mit Hilfe eines Ultra-Turrax® bei 9.500 UpM in 215 g Wasser dispergiert.
Dann wird eine Mischung aus 30,4 g (223 mmol) Methyltrimethoxysilan und 2,4 g (11 mmol) Aminoethylaminopropyltrimethoxysilan zugegeben und eine halbe Stunde nachgerührt. Nach Aufarbeitung gemäß Beispiel 1 werden 27,7 g (55,4% d.Th.) eines freifließenden feinkörnigen Pulvers erhalten.

### Beispiel 9

300 g Isooktyltriethoxysilan (Silan BS 1701, Wacker-Chemie GmbH, München) werden mit Hilfe eines Ultra-Turrax® bei 9.500 UpM in 3.600 g Wasser dispergiert. Unter Rühren wird ein Gemisch aus 411 g Methyltrimethoxysilan und 33 g Aminoethylaminopropyltrimethoxysilan zugegeben und eine halbe Stunde nachgerührt.
Nach Aufarbeitung gemäß Beispiel 1 werden 457 g (87% d.Th.) eines freifließenden weißen Pulvers erhalten.

## Patentansprüche

1. Verfahren zur Herstellung von Mikrokapseln mit Hüllwänden aus Organopolysiloxan und einem zu verkapselnden flüssigen wasserunlöslichen Kernmaterial, bei dem Organosilane und/oder deren Kondensationsprodukte mit höchstens 4 Siliziumatomen zu einer wäßrigen Emulsion oder Dispersion des Kernmaterials unter Durchmischen zugegeben werden, wobei die Hüllwände durch Hydrolyse und Polykondensation der Organosilane und/oder deren Kondensationsprodukte in situ aufgebaut werden und bei dem die Mikrokapseln durch Filtration, Zentrifugieren oder Sprühtrocknen isoliert werden.

2. Verfahren nach Anspruch 1, bei dem die Organosilane die allgemeinen Formeln Ia bis Ie
R¹ ₂R²SiX (Ia),
R¹ ₂R²SiX₂ (Ib),
R²SiX₃ (Ic),
SiX₄ (Id),
X₃Si-R³-SiX₃ (Ie),
aufweisen, in denen
**R**^{**1**} einen einwertigen, gegebenenfalls halogensubstituierten und gegebenenfalls durch Ethersauerstoffatome unterbrochenen Kohlenwasserstoffrest mit jeweils 1 bis 18 Kohlenstoffatomen oder ein Wasserstoffatom bedeutet,
**R**^{**2**} die Bedeutungen von **R**^{**1**} hat oder einen einwertigen Kohlenwasserstoffrest mit 1 bis 12 Kohlenstoffatomen je Rest, der durch eine oder mehrere Gruppen der Formeln -NR⁴-, -S-, -O-, -CO-O- unterbrochen sein kann und der mit ein oder mehreren Gruppen der Formeln -SH, -OH, -NR⁴₂, -Cl, -COOH, 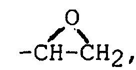 -O-CO-CR³=CH₂ substituiert sein kann, darstellt,
**R**^{**3**} ein zweiwertiger Alkylrest mit 1 bis 6 Kohlenstoffatomen oder die Phenylengruppe ist,
**R**^{**4**} ein Wasserstoffatom oder einen Alkylrest mit 1 bis 8 Kohlenstoffatomen je Rest, der durch Ethersauerstoffatome unterbrochen sein kann und
**X** eine Gruppe -OR⁴, eine Acetoxy-, Amino-, Säureamid, Oximinogruppe oder ein Chloratom bedeuten.

3. Verfahren nach Anspruch 2, bei dem die Organosilane der allgemeinen Formeln Ia bis Ie durchschnittlich mindestens 2,05 Reste **X** pro Molekül aufweisen.

4. Verfahren nach Anspruch 1 oder 2, bei dem das zu verkapselnde flüssige oder feste Kernmaterial in den Organosilanen und/oder deren Kondensationsprodukten gelöst oder dispergiert wird und die Lösung oder Dispersion in eine wäßrige Phase, die gegebenenfalls Emulgator oder Suspensionshilfsmittel enthält, eingemischt wird.

5. Verfahren nach Anspruch 1 oder 2, bei dem das zu verkapselnde flüssige oder feste Kernmaterial wasserlöslich ist oder Wasser selbst mikroverkapselt werden soll und das wasserlösliche, flüssige oder feste Kernmaterial in der gewünschten Menge Wasser gelöst und die Lösung bzw. das Wasser selbst in einer nicht mit Wasser, aber mit Organosilanen und/oder deren Kondensationsprodukten mischbaren flüssigen Phase, die gegebenenfalls Dispersions- oder Suspensionshilfsmittel enthält, dispergiert oder suspendiert wird.

## Claims

1. Process for the preparation of microcapsules having shell walls of organopolysiloxane and a liquid water-insoluble core material to be encapsulated, in which organosilanes and/or their condensates having not more than 4 silicon atoms are added to an aqueous emulsion or dispersion of the core material with thorough mixing, the shell walls being produced in situ by hydrolysis and polycondensation of the organosilanes and/or their condensates, and in which the microcapsules are isolated by filtration, centrifuging or spray-drying.

2. Process according to Claim 1, in which the organosilanes have the general formulae Ia to Ie
R¹ ₂R²SiX (Ia),
R¹ ₂R²SiX₂ (Ib),
R²SiX₃ (Ic),
SiX₄ (Id),
X₃Si-R³-SiX₃ (Ie),
in which
**R**^{**1**} denotes a monovalent, optionally halogen-substituted hydrocarbon radical which is optionally interrupted by etheroxygen atoms and has in each case 1 to 18 carbon atoms or a hydrogen atom,
**R**^{**2**} has the meanings of **R**^{**1**} or represents a monovalent hydrocarbon radical having 1 to 12 carbon atoms per radical, which may be interrupted by one or more groups of the formulae -NR⁴-, -S-, -O- and -CO-O- and which may be substituted by one or more groups of the formulae -SH, -OH, -NR⁴₂, -Cl, -COOH, and 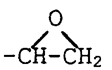 -O-CO-CR³=CH₂,
**R**^{**3**} is a divalent alkyl radical having 1 to 6 carbon atoms or the phenylene group and
**R**^{**4**} denotes a hydrogen atom or an alkyl radical having 1 to 8 carbon atoms per radical, which may be interrupted by etheroxygen atoms, and
**X** denotes a group -OR⁴, an acetoxy, amino, acid amide or oximino group or a chlorine atom.

3. Process according to Claim 2, in which the organosilanes of the general formulae Ia to Ie have on average at least 2.05 **X** radicals per molecule.

4. Process according to Claim 1 or 2, in which the liquid or solid core material to be encapsulated is dissolved or dispersed in the organosilanes and/or their condensates and the solution or dispersion is mixed into an aqueous phase which optionally contains emulsifier or suspending agent.

5. Process according to Claim 1 or 2, in which the liquid or solid core material to be encapsulated is water-soluble or water itself is to be microencapsulated, and the water-soluble, liquid or solid core material is dissolved in the desired amount of water and the solution or the water itself is dispersed or suspended in a liquid phase which is immiscible with water but is miscible with organosilanes and/or their condensates and which optionally contains dispersants or suspending agents.

## Revendications

1. Procédé de préparation de microcapsules comprenant des parois enveloppantes en organopolysiloxane et une matière de coeur liquide insoluble dans l'eau à encapsuler, dans lequel des organosilanes et/ou leurs produits de condensation ayant au plus 4 atomes de silicium sont ajoutés à une émulsion ou dispersion aqueuse de la matière de coeur en mélangeant soigneusement, les parois enveloppantes étant produites in situ par hydrolyse et polycondensation des organosilanes et/ou de leurs produits de condensation, et dans lequel les microcapsules sont isolées par filtration, centrifugation ou séchage par pulvérisation.

2. Procédé selon la revendication 1, dans lequel les organosilanes sont de formules générales Ia à Ie
R¹ ₂R² SiX (Ia),
R¹ ₂R²SiX₂ (Ib),
R²SiX₃ (Ic),
SiX₄ (Id),
X₃Si-R³-SiX₃ (Ie),
dans lesquelles
**R**^{**1**} représente un radical hydrocarboné monovalent ayant dans chaque cas de 1 à 18 atomes de carbone, éventuellement halogéno-substitué et éventuellement interrompu par des atomes d'oxygène d'éther, ou un atome d'hydrogène,
**R**^{**2**} présente les significations de **R**^{**1**} ou représente un radical hydrocarboné monovalent ayant de 1 à 12 atomes de carbone par radical, qui peut être interrompu par 1 ou plusieurs groupes de formules -NR⁴-, -S-, -O-, -CO-O-, et qui peut être substitué par ou plusieurs groupes de formules -SH, -OH, -NR⁴₂, -Cl, -COOH, 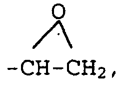 -O-CO-CR³=CH₂,
**R**^{**3**} représente un radical alkyle bivalent ayant de 1 à 6 atomes de carbone ou le groupe phénylène,
**R**^{**4**} représente un atome d'hydrogène ou un radical alkyle ayant de 1 à 8 atomes de carbone par radical, qui peut être interrompu par des atomes d'oxygène d'éther, et
**X** représente un groupe -OR⁴, un groupe acétoxy, amino, amide ou oximino, ou un atome de chlore.

3. Procédé selon la revendication 2, dans lequel les organosilanes de formules générales Ia à Ie renferment en moyenne au moins 2,05 radicaux **X** par molécule.

4. Procédé selon la revendication 1 ou 2, dans lequel la matière de coeur liquide ou solide à encapsuler est dissoute ou dispersée dans les organosilanes et/ou leurs produits de condensation et la solution ou dispersion est mélangée dans une phase aqueuse comprenant éventuellement un émulsifiant ou un auxiliaire de mise en suspension.

5. Procédé selon la revendication 1 ou 2, dans lequel la matière de coeur liquide ou solide à encapsuler est hydrosoluble ou l'eau elle-même est destinée à être microencapsulée, et la matière de coeur liquide ou solide hydrosoluble est dissoute dans la quantité souhaitée d'eau et la solution ou l'eau elle-même est dispersée ou mise en suspension dans une phase liquide qui est immiscible avec l'eau mais miscible avec des organosilanes et/ou leurs produits de condensation et qui comprend éventuellement des auxiliaires de dispersion ou de mise en suspension.
